Europäisches Patentamt

European Patent Office

Office européen des brevets

(11) Publication number: **0 055 322**
**B1**

(12)  **EUROPEAN PATENT SPECIFICATION**

(45) Date of publication of patent specification: **22.05.85**

(21) Application number: **81105734.8**

(22) Date of filing: **21.07.81**

(51) Int. Cl.⁴: **H 01 R 23/68,** H 05 K 3/00, H 05 K 3/42, H 01 L 21/306

(54)  Miniature electrical connectors and methods of fabricating them.

(30) Priority: **31.12.80 US 221870**

(43) Date of publication of application:
**07.07.82 Bulletin 82/27**

(45) Publication of the grant of the patent:
**22.05.85 Bulletin 85/21**

(84) Designated Contracting States:
**DE FR GB**

(56) References cited:
**DE-A-2 303 798**

**IBM TECHNICAL DISCLOSURE BULLETIN, vol.
22, no. 4, September 1979, New York E,
BASSOUS et al. "Structure and fabrication
process of a cryogenic connector", pages
1676-1678**
**IBM TECHNICAL DISCLOSURE BULLETIN, vol.
20, no. 11B, April 1978, New York N. BRASLAU
et al. "Package for high speed circuits", pages
4975, 4976**

(73) Proprietor: **International Business Machines
Corporation
Old Orchard Road
Armonk, N.Y. 10504 (US)**

(72) Inventor: **Palmer, Michael Jon
RD 2, Box 372
Walden New York 12583 (US)**
Inventor: **Shih, Kwang Kuo
2322 Vista Court
Yorktown Heights New York 10598 (US)**

(74) Representative: **Hobbs, Francis John
IBM United Kingdom Patent Operations Hursley
Park
Winchester, Hants, SO21 2JN (GB)**

Courier Press, Leamington Spa, England.

## Description

This invention relates to miniature electrical connectors and their fabrication.

A multisocket electrical connector is described in the IBM Technical Disclosure Bulletin, Vol. 19, No. 1, June 1976, pages 372 to 374. The connector consists of two silicon wafers bonded together having cavities filled with a metal which is liquid at or above a desired temperature. The connector supports a high density of electrical conducting pins which are individually insulated.

Fabrication of the connector comprises the anisotropic etching of tetrahedral openings in two silicon wafers. The two mirror-imaged wafers are laminated so that the base of the tetrahedrals are aligned to form an octahedral cavity. While the disclosed connectors are useful, they suffer some drawbacks. More particularly, because of the need to bond to substrates increased inductance occurs across the cavity, thus lowering the speed of operations. Similarly, because of the need to match to substrates packing densities are reduced.

We have discovered that octahedral cavities can be anisotropically etched in a single silicon substrate. Such cavities can be thinner and therefore have less inductance which can result in higher speeds of operation. Greater densities are also obtainable.

An object of the invention is to provide a structure having a closely spaced array of octahedral cavities in a single wafer of silicon.

Another object of the invention is to provide a method of fabricating miniature electrical connectors.

A miniature electrical connector comprises, according to one aspect of the invention, a single wafer of silicon having a plurality of octahedral cavities formed therethrough.

According to another aspect of the invention, a method of fabricating a miniature electrical connector comprising a plate-like structure of silicon having a plurality of octahedral cavities therein, is characterised by the successive steps of growing $SiO_2$ films (2, 2') on opposite sides of a single monocrystalline wafer of silicon having the (100) planes parallel to its surface, forming aligned holes in the $SiO_2$ films, and simultaneously etching both sides of the wafer in an anisotropic etching solution.

How the invention can be carried out will now be described by way of example, with reference to the accompanying drawings, in which:—

Figure 1 is a perspective view of a octahedral cavity prepared by a method according to the invention;

Figure 2 is a schematic view of a portion of a miniature electrical connector;

Figure 3 is a schematic view of a portion of a prior art miniature electrical connector; and

Figures 4.1 to 4.5 illustrate successive steps in fabricating the miniature electrical connector of Figure 2.

Octahedral cavity arrays offer the capability of fabricating high density demountable connectors with zero insertion force. They are also suitable for partitioning the interconnections of circuit boards. Their fabrication is completely compatible with silicon large scale integration technology.

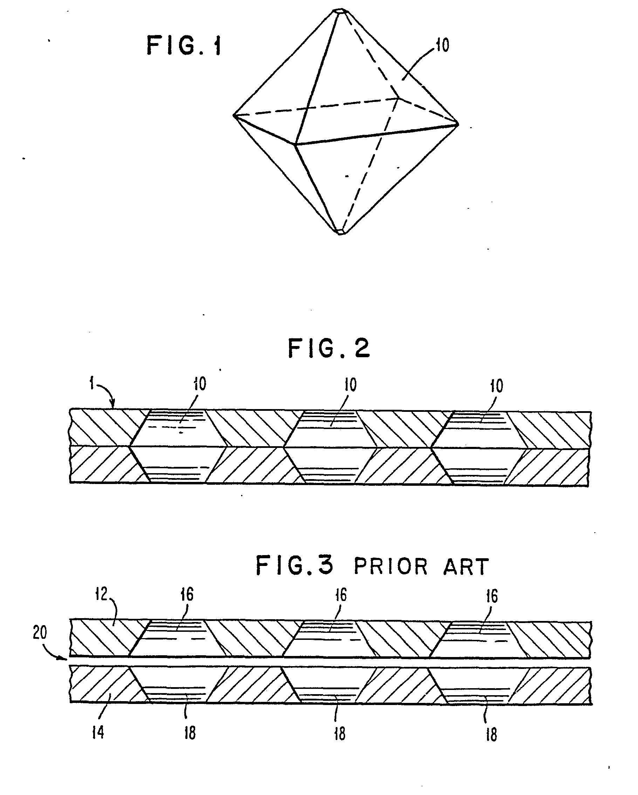

An octahedral cavity formed by a method according to the present invention is illustrated in Figure 1. The cavity is formed in a single silicon wafer by etching both sides of the wafer in an anisotropic etchant. Etchants found suitable for use in the present invention includes solutions of pyrocatechol, ethylene diamine and water, KOH solutions, NaOH solutions and hydrazine water solutions. The thickness of the wafer needed to get these cavities is dependent upon the initial hole size through which etching is to proceed. The thickness needed in the process is equal to or less than 2w/1.42 where w is the width of the entrance and exit holes.

For example, if the hole size is 5 mil × 5 mil (0.13 mm × 0.13 mm), wafer thickness should be less than about 7 mils (0.18 mm). If the wafer thickness is greater than about 7 mils (0.18 mm) etching will end prior to meeting at a central point within the wafer. Consequently pyramidal cavities will develop. Whereas, if the wafer thickness is equal to or less than about 7 mils (0.18 mm), etching will proceed through the wafer. After which etching will then proceed at the intersection of the (111) planes of the cavity until the desired octahedral cavity is formed.

Figure 2 illustrates an array of octahedral cavities formed in a single Si wafer 1 by a method according to the present invention. In contrast Figure 3 illustrates a similar array of octahedral cavities 10 prepared by a known method. In the known method two wafers 12 and 14 are etched in an anisotropic etchant to form pyramidal openings 16 and 18 in the individual wafers. The etched wafers 12 and 14 are then mirror image matched and bonded together with a bonding agent 20. The array of the present invention is thinner, i.e., about half as thick as the prior art, thus when used as electrical conductors exhibit less inductance. Consequently, connectors according to the present invention will exhibit higher speed operations than the prior art connectors. Another advantage of the present invention is that higher packing densities are obtainable than with the prior art connectors.

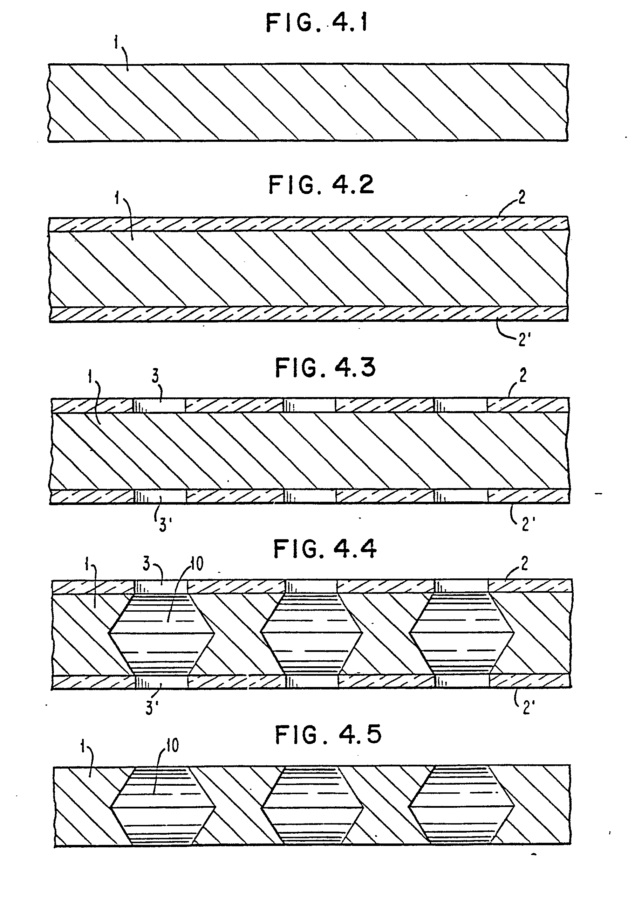

The method comprises providing a monocrystalline silicon wafer 1 (Figure 4.1) having a (100) crystallographic orientation, i.e. the (100) planes are parallel to the surface of the crystal. As indicated above the thickness of the wafer is dependent upon the initial opening sizes. $SiO_2$ films (2, 2') about $5 \times 10^{-7}$ m (5000 Å) thick are then formed on both sides of the wafer 1. The $SiO_2$ films (2, 2') are coated with a resist material (not shown), the resist is patterned and developed through mirror-imaged masks to provide aligned openings 3, 3' (Figure 4.3) in both the $SiO_2$ films (2, 2'). State of the art etching and developing agents are used. The wafer 1 is then immersed in an anisotropic etchant, so that both surfaces of the wafer 1 are etched simultaneously. As indicated above the openings 3, 3' are preferentially etched in the (100) plane. The etchant can be effected using a water amine pyrocatechol etchant or other basic etchants. Etching further proceeds along the (111) plane until octahedral cavities (Figure 4.4) are obtained. The precision etching of monocrystalline materials is an established technique and is discussed extensively in the art, for example, in U.S. Patent No. 3,765,959.

The remaining $SiO_2$ films 2, 2' are then removed to provide the octahedral cavity array structure. The oxide can be removed by known methods, for example with buffered HF at room temperature, followed by rinsing in distilled water.

The structure represented in Figure 4.5 can be used as a multi-socket electrical connector for use at cryogenic temperatures. The cavities are filled with a suitable metal which is liquid at the temperature of operation, and a suitable male electrical connector inserted therein. The connector can be cycled repeatedly between liquid helium and room temperatures without suffering structural failures. For example, arrays made in accordance with this invention have been cycled between 4.2°K and room temperature at least 50 times.

Other uses of the octahedral cavity array include optical fibre wire connections and evaporation masks.

## Claims

1. A miniature electrical connector comprising a single wafer (1) of silicon having a plurality of octahedral cavities (10) formed therethrough.

2. A miniature electrical connector as claimed in Claim 1, in which the octahedral cavities are filled with a liquid metal.

3. A method of fabricating a miniature electrical connector comprising a plate-like structure of silicon having a plurality of octahedral cavities therein, characterised by the successive steps of growing $SiO_2$ films (2, 2') on opposite sides of a single mono-crystalline wafer of silicon having the (100) planes parallel to its surface, forming aligned holes in the $SiO_2$ films, and simultaneously etching both sides of the wafer in an anisotropic etching solution.

4. A method as claimed in Claim 3, in which the anisotropic etching solution is a hydrazine-water solution.

5. A method as claimed in Claim 3, in which the anisotropic etching solution is an ethylene diamine, pyrocatechol and water solution.

## Patentansprüche

1. Elektrischer Miniatursteckverbinder, welcher ein einzige Siliziumscheibe (1) mit darin ausgebildeten oktaedrischen Hohlräumen (10) aufweist.

2. Elektrischer Miniatursteckverbinder nach Anspruch 1, bei welchem die oktaedrischen Hohlräume mit einem flüssigen Metall gefüllt sind.

3. Verfahren zur Herstellung eines elektrischen Miniatursteckverbinders, welcher eine plattenartigen Aufbau aus Silizium mit darin ausgebildeten oktaedrischen Hohlräumen aufweist, gekennzeichnet, durch die aufeinanderfolgenden Verfahrensschritte des Aufwachsens eines $SiO_2$-Films (2, 2') auf gegenüberliegenden Seiten einer einzigen Silizium-Einkristallscheibe mit zu ihrer Oberfläche parallelen (100)-Ebenen, das Ausbilden von ausgerichteten Löchern in den $SiO_2$-Filmen und das gleichzeitige Ätzen beider Seiten der Scheibe in einer anisotropen Ätzlösung.

4. Verfahren nach Anspruch 3, bei welcher die anisotrope Ätzlösung eine Hydrazin-Wasserlösung ist.

5. Verfahren nach Anspruch 3, bei welcher die anisotrope Ätzlösung eine Lösung aus Ethylendiamin, Pyrocatechol und Wasser ist.

## Revendications

1. Un connecteur électrique miniature comprenant une seule pastille (1) de silicium pourvue d'une pluralité de cavités octaédriques (10) traversantes.

2. Un connecteur électrique miniature comme revendiqué dans la revendication 1, dans lequel les cavités octaédriques sont remplies d'un métal liquide.

3. Un procédé de fabrication d'un connecteur électrique miniature comprenant une structure en forme de plaquette en silicium pourvue d'une pluralité de cavités octaédriques, caractérisé par les étapes successives consistant à former des films de $SiO_2$ (2, 2') sur des côtés opposés d'une seule pastille monocristalline de silicium dont les plans (100) sont parallèles à sa surface, à ménager des trous alignés dans les films de $SiO_2$ et à graver simultanément les deux côtés de la pastille dans une solution de gravure anisotrope.

4. Un procédé comme revendiqué dans la revendication 3, dans lequel la solution de gravure anisotrope est une solution d'hydrazine et d'eau.

5. Un procédé comme revendiqué dans la revendication 3, dans lequel la solution de gravure anisotrope est une solution d'éthylène diamine, de pyrocatéchol et d'eau.

FIG.1

10

FIG.2

1
10        10        10

FIG.3 PRIOR ART

12        16        16        16
20
14        18        18        18

# FIG. 4.1

# FIG. 4.2

# FIG. 4.3

# FIG. 4.4

# FIG. 4.5